(19) Europäisches Patentamt
European Patent Office
Office européen des brevets

(11) **EP 2 640 662 B1**

(12) **FASCICULE DE BREVET EUROPEEN**

(45) Date de publication et mention de la délivrance du brevet:
**25.02.2015 Bulletin 2015/09**

(21) Numéro de dépôt: **11794826.5**

(22) Date de dépôt: **17.11.2011**

(51) Int Cl.:
*C01B 11/06* <sup>(2006.01)</sup>

(86) Numéro de dépôt international:
**PCT/FR2011/052676**

(87) Numéro de publication internationale:
**WO 2012/066243 (24.05.2012 Gazette 2012/21)**

(54) **PROCEDE DE PREPARATION DE SOLUTIONS CONCENTREES D'HYPOCHLORITE DE METAL ALCALIN**

VERFAHREN ZUR HERSTELLUNG VON KONZENTRIERTEN ALKALIMETALLHYPOCHLORITLÖSUNGEN

METHOD FOR PREPARING CONCENTRATED ALKALI METAL HYPOCHLORITE SOLUTIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.11.2010 FR 1059461**
**18.11.2010 US 415093 P**

(43) Date de publication de la demande:
**25.09.2013 Bulletin 2013/39**

(73) Titulaire: **Arkema France**
**92700 Colombes (FR)**

(72) Inventeur: **BOSSOUTROT, Jean-Michel**
**F-69630 Chaponost (FR)**

(56) Documents cités:
**EP-A1- 0 527 083      FR-A- 1 549 118**

**Description**

La présente invention concerne un procédé de préparation de solutions concentrées d'hypochlorite de métal alcalin. L'invention a plus particulièrement pour objet un procédé de préparation de javel concentrée pouvant avoir une teneur en chlore supérieure à 100° chlorométriques, et présentant une faible teneur en chlorates.

Un procédé de synthèse de javel concentrée est décrit dans la demande de brevet EP0527083. La synthèse se fait par réaction d'une molécule de chlore sur de la soude. De par sa concentration, cette javel dite « haut titre » est particulièrement intéressante économiquement puisqu'elle permet de limiter les coûts de transport. En effet la quantité d'eau dans une javel haut titre étant plus faible que dans une javel standard, on transporte moins d'eau pour une même quantité de javel. D'autre part, la javel Haut titre obtenue par le procédé ci-dessus, contient peu de sel après dilution, ce qui apporte une grande stabilité dans le temps.

Néanmoins, la synthèse de javel à haute concentration conduit à favoriser des réactions parasites telle que celle conduisant à la formation de chlorate suivant la réaction suivante :

$$3\ NaClO \rightarrow NaClO3 + 2\ NaCl$$

Cette réaction conduit généralement à la formation de chlorate lors de la synthèse, en plus grande quantité dans la Javel haut titre par rapport aux Javel obtenues par d'autres procédés.

Or, la présence de chlorate dans la javel constitue un inconvénient majeur lorsque celle-ci doit par exemple être ajoutée à de l'eau potable. En effet, lorsque l'on ajoute de la javel à de l'eau potable, les réglementations imposent le plus souvent une très faible teneur en chlorate.

On a maintenant trouvé un procédé de préparation de solutions concentrées d'hypochlorite de métal alcalin, présentant une faible teneur en chlorates.

L'invention est un procédé de préparation d'une solution concentrée d'un hyopochlorite de métal alcalin par réaction du chlore et d'une solution d'hydroxyde du métal alcalin correspondant en présence de cristaux de chlorure de métal alcalin dans lequel dans un récipient de volume « Vr » essentiellement vertical dont la partie basse à une section inférieure à la section de sa partie haute :

a) on injecte dans la partie basse du chlore et une solution d'hydroxyde de métal alcalin,

b) dans la partie haute, on prélève la solution d'hypochlorite selon un débit « Qs », (i) une partie constitue la production de la solution concentrée d'hypochlorite, (ii) l'autre partie est recyclée dans la partie basse du récipient,

c) on purge les cristaux de chlorure de métal alcalin près de l'extrémité inférieure de la partie basse du récipient,

d) on ajuste le recyclage et l'injection des réactifs de l'étape a) de telle sorte que les cristaux de chlorure de métal alcalin sont fluidisés essentiellement dans la partie basse du récipient, et caractérisé en ce que les chlorates sont présents en une quantité comprise entre 0,01% en poids et 0,2% en poids en conduisant le procédé dans les conditions ci-dessous :

$$0,01\% < r*X*(100*M/\rho)) < 0,2\ \%$$

où

- r est la vitesse de réaction exprimée en (mol/l.s), où r = k [ClO⁻]² ; $k = k_0 * e^{\frac{-Ea}{RT}}$, $K_0$= 7.91 10¹⁰ 1/mol.s ;

Ea = 1.05 10⁵ J/mol, R=8,314472 J/mol.K, et T est la température du réacteur exprimé en Kelvins ; - X est le temps de séjour exprimé en secondes, où X=Vr/Qs ;

- M est la masse molaire du chlorate de sodium soit 106.5 g/mol ;

- p est la masse volumique de la solution exprimée en g/l.

Ainsi, dans le procédé objet de l'invention, la concentration en chlorates est comprise entre 0,01% et 0,2% en poids par rapport au poids total de javel.

La mesure de la concentration en ions hypochlorite [ClO⁻] est réalisée par oxydation de l'iodure de potassium en milieu acétique et dosage de l'iode formé par le thiosulfate de sodium.

Le procédé objet de l'invention peut être mis en oeuvre avec du chlore pur liquide ou gazeux ou un gaz contenant du chlore et inerte pour la réaction ; par exemple de l'air ou de l'azote chargés en chlore. La concentration de la solution d'hydroxyde est choisie en fonction de la concentration de la solution d'hypochlorite qu'on veut préparer. On peut aussi utiliser une solution concentrée d'hydroxyde et ajouter de l'eau. La réaction est totale et stoechiométrique. On peut opérer à toute pression mais il est beaucoup plus simple d'opérer à la pression atmosphérique. Le récipient peut être ouvert mais on préfère le fermer et le relier à un système d'absorption pour être sûr en cas d'incident de ne pas laisser échapper du chlore dans l'atmosphère bien qu'on opère toujours avec un léger excédent d'hydroxyde. La température de la solution à l'intérieur du récipient et dans le circuit de recyclage est de préférence maintenu en dessous de 35°C pour éviter la formation de chlorate.

On peut disposer un échangeur de chaleur de préférence sur le circuit de recyclage ou disposer un échangeur dans le récipient, ou utiliser un récipient à double enveloppe avec circulation d'un fluide à basse température ou toute combinaison de ces moyens.

Le récipient peut être une simple colonne surmontée d'une autre colonne de diamètre plus grand, la liaison se faisant par un tronc de cône. Le rapport de la section de la partie haute à la section de la partie basse doit être suffisant pour que les cristaux fluidisés restent en majorité dans la partie basse et que si la fluidisation était trop forte ils puissent décanter dans la partie haute et redescendre dans la partie basse. On obtient ainsi un grossissement des cristaux de chlorure du métal alcalin, la précipitation du chlorure se faisant sur les cristaux existants. Il se forme évidemment aussi de nouveaux petits cristaux, qui sont dans tout le récipient et qui circulent avec le recyclage. Avantageusement le rapport de la section de la partie haute du récipient à la section de la partie basse est supérieure à 1,2 et de préférence compris entre 2 et 12. Le volume de la partie basse peut représenter au moins 30 % du volume total du récipient et de préférence 40 à 60 %. Le volume de la partie basse est déterminé comme dans l'art antérieur par la réaction du chlore sur l'hydroxyde de métal alcalin.

La partie de l'hypochlorite prélevée à l'étape b) et qui constitue la production peut ensuite être filtrée ou légèrement diluée pour faire disparaître les petits cristaux de chlorure de métal alcalin.

Le procédé objet de l'invention présente ainsi deux avantages majeurs :

(i) il permet de produire une solution d'hypochlorite faiblement concentrée en chlorates, composé indésirable lorsque la solution doit par exemple être ajoutée à de l'eau potable, et

(ii) il permet de produire facilement une solution très concentrée d'hypochlorite qu'on peut donc diluer légèrement pour la débarrasser complètement des moindres cristaux de chlorure.

Ainsi, selon l'invention on produit une solution concentrée d'hypochlorite pratiquement exempte de cristaux de chlorure et exempte de chlorates. Une légère dilution fait alors disparaître les derniers cristaux de NaCl, mais permet surtout d'avoir une solution concentrée non saturée en chlorure alcalin. Cette réserve de solubilité limite la réapparition de cristaux de sel avant l'utilisation du produit. On peut ainsi produire un hypochlorite à 27 % de chlore actif qu'on dilue jusqu'à 25 % de chlore actif. La conversion des degrés chlorométriques en % $Cl_2$ actif est donnée par la formule suivante :

$$\%Cl2 \; actif = (degré \; chloro*3,17 \; g/l \; *100)/(densité \; (g/l))$$

Ainsi, par exemple :

| Degré chlorométrique | Densité | % chlore actif |
|---|---|---|
| 115 | 1335 | 27,3 |
| 100 | 1315 | 24,1 |

Un autre avantage de ce procédé sur le plan industriel est qu'il ne nécessite pas d'apport de cristaux de chlorure alcalin pour amorcer la cristallisation dans les phases de démarrage. Les particules fines piégées dans le réacteur, grossissent progressivement et forment le lit fluide.

Selon une forme préférée de l'invention, on effectue l'étape b) en soutirant la production de la solution concentrée d'hypochlorite à l'extrémité supérieure de la partie haute et on prélève la solution d'hypochlorite pour le recyclage à un point situé dans la partie haute mais en dessous du soutirage. On peut aussi ajuster le recyclage et l'injection des réactifs de telle sorte que les petits cristaux de chlorure normalement présents dans la partie haute montent jusqu'au point où on prélève le recyclage mais ne montent pas jusqu'à l'extrémité supérieure de la partie haute. L'homme de l'art peut facilement déterminer cette hauteur séparant l'extrémité supérieure de la partie haute et le point de prélèvement du recyclage. De préférence, le prélèvement pour le recyclage s'effectue à mi-hauteur de la section haute.

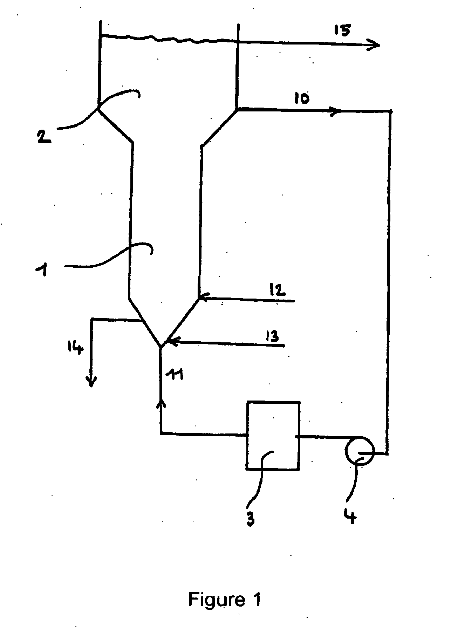

La figure 1 décrit un mode de réalisation possible de la présente invention. 1 et 2 représentent respectivement la partie basse et la partie haute du récipient. On soutire en 15 la production d'hypochlorite concentrée, on prélève en

la solution d'hypochlorite pour le recyclage vers la pompe 4 et qui retourne en 11 dans la partie basse 1 après passage dans l'échangeur 3. On injecte la solution d'hydroxyde de métal alcalin par la tubulure 13 et le chlore par la tubulure 12. Par la tubulure 14 on extrait le chlorure de métal alcalin.

## Exemple 1 (comparatif)

Un dispositif selon la figure 1 de caractéristiques suivantes est utilisé :

Le réacteur utilisé est constitué de trois parties :

* Une partie inférieure conique (phi 1300, h = 1900) reçoit le retour de la boucle de refroidissement.
* Une partie intermédiaire cylindrique (phi 1300, h = 3500) constitue la zone de réaction et de fluidisation ;
* Une partie supérieure cylindro-conique (phi 3500, h = 1900) dite zone de décantation.

Les réactifs sont injectés au pied de la partie intermédiaire. Le départ de la boucle de refroidissement est en bas de la partie cylindrique alors que la sortie du produit fini se fait dans la partie supérieure. Le volume du récipient est de 15 m$^3$. La partie basse représente 37 % du volume du récipient. Le rapport des sections est de 7. Le débit de recyclage est de 60 m3 par heure. Un échangeur thermique refroidit de 30°C à 20 °C.

On injecte 1270 kg/h de NaOH (soude 50 %), 1100 kg/h de chlore 97 %, 1200 kg/h d'eau en amont de la pompe de recirculation. On produit 3 m$^3$/h de solution d'hypochlorite de sodium à 27 % de Cl$_2$ actif et 600 kg/h de cristaux NaCl. Après le soutirage la javel est diluée de 27 à 25 % de chlore actif.

La perte journalière moyenne sur 7 jours est de l'ordre de 0,35 % de chlore actif à 17°C.

Le taux de chlorate avant dilution est de 0,26% en poids par rapport au poids total de la solution de Javel.

## Exemple 2 (invention)

On reproduit l'exemple 1 en changeant les paramètres suivants :

T = 30°C
temps de séjour : 3h
concentration en chlorate obtenue : 0.16% en poids par rapport au poids total de la solution de Javel

## Exemple 3 (invention)

On reproduit l'exemple 1 en changeant les paramètres suivants :

T = 25°C
temps de séjour : 5h
concentration en chlorate obtenue : 0.13% par rapport au poids total de la solution de Javel

## Exemple 4 (invention)

On reproduit l'exemple 1 en changeant les paramètres suivants :

T = 20°C
temps de séjour : 3h
concentration en chlorate obtenue : 0.04% par rapport au poids total de la solution de Javel

## Revendications

1. Procédé de préparation d'une solution concentrée d'un hypochlorite de métal alcalin par réaction du chlore et d'une solution d'hydroxyde du métal alcalin correspondant en présence de cristaux de chlorure de métal alcalin dans lequel dans un récipient de volume « Vr » essentiellement vertical dont la partie basse a une section inférieure à la section de sa partie haute :

a) on injecte dans la partie basse du chlore et une solution d'hydroxyde de métal alcalin,
b) dans la partie haute on prélève la solution d'hypochlorite selon un débit « Qs », (i) une partie constitue la production de la solution concentrée d'hypochlorite, (ii) l'autre partie est recyclée dans la partie basse du récipient,

c) on purge les cristaux de chlorure de métal alcalin près de l'extrémité inférieure de la partie basse du récipient,

d) on ajuste le recyclage et l'injection des réactifs de l'étape a) de telle sorte que les cristaux de chlorure de métal alcalin sont fluidisés essentiellement dans la partie basse du récipient, et **caractérisé en ce que** les chlorates sont présents en une quantité comprise entre 0,01% en poids et 0,2% en poids en conduisant le procédé dans les conditions ci-dessous :

$$0,01\% \ < \ r*X*(100*M/\rho)) \ < \ 0,2 \ \%$$

où

- r est la vitesse de réaction exprimée en (mol/l.s), où r = k [ClO$^-$]$^2$; $k = k_0 * e^{\frac{-Ea}{RT}}$, $K_0$ = 7.91 10$^{10}$ l/mol.s ; Ea = 1.05 10$^5$ J/mol, R=8,314472 J/mol.K, et T est la température du réacteur exprimé en Kelvins ;
- X est le temps de séjour exprimé en secondes, où X=Vr/Qs ;
- M est la masse molaire du chlorate de sodium soit 106.5 g/mol ;
- p est la masse volumique de la solution exprimée en g/l.

2. Procédé selon la revendication 1 **caractérisé en ce que** le rapport de la section de la partie haute du récipient à la section de la partie basse est supérieure à 1,2 et de préférence compris entre 2 et 12.

3. Procédé selon la revendication 1 ou 2 **caractérisé en ce que** le volume de la partie basse représente au moins 30 % du volume total du récipient et de préférence 40 à 60 %.

4. Procédé selon l'une des revendications 1 à 3 **caractérisé en ce que** l'on effectue l'étape b) en soutirant la production de la solution concentrée d'hypochlorite à l'extrémité supérieure de la partie haute et on prélève la solution d'hypochlorite pour le recyclage à un point situé dans la partie haute mais en-dessous du soutirage.

5. Procédé selon la revendication 4 **caractérisé en ce que** le prélèvement pour le recyclage s'effectue à mi-hauteur de la section haute.

**Patentansprüche**

1. Verfahren zur Herstellung einer konzentrierten Lösung eines Alkalimetallhypochlorits durch Reaktion von Chlor und einer Lösung eines entsprechenden Alkalimetallhydroxids in Gegenwart von Alkalimetallchloridkristallen, bei dem man in einem im Wesentlichen vertikalen Behälter mit dem Volumen "Vr", dessen unterer Teil einen kleineren Querschnitt hat als der obere Teil:

a) in den unteren Teil Chlor und eine Alkalimetallhydroxidlösung einleitet,

b) in dem oberen Teil die Hypochloritlösung mit einer Strömungsrate "Qs" abzieht, (i) ein Teil die Produktion der konzentrierten Hypochloritlösung darstellt, (ii) der andere Teil in den unteren Teil des Behälters zurückgeführt wird,

c) die Alkalimetallchloridkristalle in der Nähe des unteren Endes des unteren Teils des Behälters ablässt,

d) die Rückführung und Einleitung der Reaktanten von Schritt a) so einstellt, dass die Alkalimetallchloridkristalle im Wesentlichen im unteren Teil des Behälters fluidisiert werden, und **dadurch gekennzeichnet, dass** die Chlorate in einer Menge zwischen 0,01 Gew.-% und 0,2 Gew.-% vorliegen, indem man das Verfahren unter den nachstehenden Bedingungen duchführt:

$$0,01\% \ < \ r*X*(100*M/\rho)) \ < \ 0,2\%$$

wobei

- r die Reaktionsgeschwindigkeit in (mol/l.s) ist, wobei r = k [ClP$^-$]$^2$; $k = k_0 * e^{\frac{-Ea}{RT}}$, $K_0$ = 7,91 10$^{10}$

l/mol.s; Ea = 1,05 10$^5$ J/mol, R = 8,314472 J/mol.K und T die Temperatur des Reaktors in Kelvin ist;
- X die Verweilzeit in Sekunden ist, wobei X = Vr/Qs;
- M die Molmasse von Natriumchlorat ist, d.h. 106,5 g/mol;
- $\rho$ die Dichte der Lösung in g/l ist.

2. Verfahren nach Anspruch 1, **dadurch gekennzeichnet, dass** das Verhältnis des Querschnitts des oberen Teils des Behälters zum Querschnitt des unteren Teils größer als 1,2 ist und vorzugsweise zwischen 2 und 12 liegt.

3. Verfahren nach Anspruch 1 oder 2, **dadurch gekennzeichnet, dass** das Volumen des unteren Teils mindestens 30% des Gesamtvolumens des Behälters und vorzugsweise 40 bis 60% ausmacht.

4. Verfahren nach einem der Ansprüche 1 bis 3, **dadurch gekennzeichnet, dass** man Schritt b) durchführt, indem man die Produktion der konzentrierten Hypochloritlösung am oberen Ende des oberen Teils abzieht und die Hypochloritlösung für die Rückführung an einem Punkt, der sich im oberen Teil, aber unterhalb des Abzugs befindet, austrägt.

5. Verfahren nach Anspruch 4, **dadurch gekennzeichnet, dass** das Austragen für die Rückführung auf halber Höhe des oberen Teils erfolgt.

## Claims

1. Process for preparing a concentrated solution of an alkali metal hypochlorite by reacting chlorine and a solution of the corresponding alkali metal hydroxide in the presence of alkali metal chloride crystals in which, in an essentially vertical vessel of volume "Vr", the bottom part of which has a cross section smaller than the cross section of its top part:

   a) chlorine and an alkali metal hydroxide solution are injected into the bottom part,
   b) in the top part, the hypochlorite solution is withdrawn at a flow rate "Qs", (i) one portion forms the concentrated hypochlorite solution produced, (ii) the other portion is recycled to the bottom part of the vessel,
   c) the alkali metal chloride crystals are purged close to the lower end of the bottom part of the vessel,
   d) the recycling and the injection of the reactants from step a) are adjusted so that the alkali metal chloride crystals are fluidized essentially in the bottom part of the vessel, and **characterized in that** the chlorates are present in an amount between 0.01% by weight and 0.2% by weight by carrying out the process under the conditions below:

$$0.01\% < r*X*(100*M/\rho) < 0.2\%$$

   where

   - r is the rate of reaction expressed in mol/l.s, where r = k [ClO$^-$]$^2$; $k = k_0 * e^{\frac{-Ea}{RT}}$, * K$_0$= 7.91$\times$10$^{10}$ l/mol.s; Ea = 1.05$\times$10$^5$ J/mol, R=8.314472 J/mol.K, and T is the temperature of the reactor expressed in Kelvin;
   - X is the residence time expressed in seconds, where X=Vr/Qs;
   - M is the molar mass of sodium chlorate, i.e. 106.5 g/mol;
   - $\rho$ is the density of the solution expressed in g/l.

2. Process according to claim 1, **characterized in that** the ratio of the cross section of the top part of the vessel to the cross section of the bottom part is greater than 1.2 and preferably is between 2 and 12.

3. Process according to claim 1 or 2, **characterized in that** the volume of the bottom part represents at least 30% of the total volume of the vessel and preferably 40 to 60%.

4. Process according to one of claims 1 to 3, **characterized in that** step b) is carried out by drawing off the concentrated hypochlorite solution produced at the upper end of the top part and the hypochlorite solution for recycling is withdrawn at a point located in the top part but below the draw-off point.

**5.** Process according to claim 4, **characterized in that** the withdrawal for recycling takes place at the mid-height of the top section.

Figure 1

**EP 2 640 662 B1**

## RÉFÉRENCES CITÉES DANS LA DESCRIPTION

### Documents brevets cités dans la description

- EP 0527083 A